# EUROPÄISCHE PATENTSCHRIFT

(11) **EP 1 170 046 B1**
(45) Veröffentlichungstag und Bekanntmachung des Hinweises auf die Patenterteilung: **07.12.2005**
(21) Anmeldenummer: 01109816.7
(22) Anmeldetag: 21.04.2001
(51) Int. Cl.: A63H 33/04, A63H 33/00

(54) **Formgebungsvorrichtung zum Umformen eines aus einem festen Schaum bestehenden, plastisch verformbaren Spielbausteins**
Shaping device for forming a plastically deformable toy building block made of solid foam
Dispositif de mise en forme pour façonner un bloc de jeu de construction déformable plastiquement et fait en mousse solide

(30) Priorität: 03.07.2000 DE 20011183 U
(43) Veröffentlichungstag der Anmeldung: 09.01.2002
(73) Patentinhaber: Artur Fischer TIP GmbH & Co. KG, 72178 Waldachtal (DE)
(72) Erfinder: Fischer, Artur, Senator Prof.Dr. phil.h.c.Dr.-Ing., 72178 Waldachtal (DE)

(56) Entgegenhaltungen:
- EP-A- 0 596 194
- EP-A- 1 044 710
- DE-C- 286 710
- DE-C- 549 394
- DE-C- 19 628 349
- DE-U- 1 942 448

## Beschreibung

Die Erfindung betrifft eine Formgebungsvorrichtung zum Umformen eines aus einem festen Schaum bestehenden, plastisch verformbaren Spielbausteins mit den Merkmalen des Oberbegriffs des Anspruchs 1.

Eine derartige Formgebungsvorrichtung ist bekannt aus der DE 199 16 736. Die bekannte Formgebungsvorrichtung ist zweiteilig, sie weist ein im Querschnitt U-förmiges Teil sowie ein Teil mit einer Längswand, von der zwei Stirnwände abstehen, auf. Die beiden Teile der bekannten Formgebungsvorrichtung sind so zusammensetzbar, dass sie einen quaderförmigen Hohlraum, den sogenannten Formgebungsraum umschliessen.

Die bekannte Formgebungsvorrichtung dient zum Umformen eines aus einem festen Schaum bestehenden, plastisch verformbaren Spielbausteins, wie er beispielsweise in der DE 197 03 038 offenbart ist. Die bekannten Spielbausteine sind durch Extrudieren aus einem stärkehaltigen Material aufgeschäumt, sie weisen nach dem Extrudieren eine näherungsweise zylindrische Form auf. Zum Umformen wird ein solcher Spielbaustein in eines der beiden Teile der bekannten Formgebungsvorrichtung eingelegt und die Formgebungsvorrichtung wird mit dem anderen Teil geschlossen. Der Formgebungsraum der Formgebungsvorrichtung weist ein kleineres Volumen als der Spielbaustein in seinem Ausgangszustand auf, der Spielbaustein wird in der Formgebungsvorrichtung auf ein kleineres Volumen komprimiert. Zugleich wird der Spielbaustein zu näherungsweise einem Quader umgeformt.

Aus der DE 286 710 C ist eine Formgebungsvorrichtung zum Urformen von Spielzeugbausteinen aus einer feuchten Zementmasse bekannt. Es handelt sich um eine Spindelpresse mit einem länglichen, quaderförmigen Formgebungsraum, in den die feuchte Zementmasse gefüllt und anschließend mit einem Stempel der Spindelpresse zu einem Quader geformt wird. Aus der EP-A-1044710 ist eine Formgebungsvorrichtung zum Umformen eines aus einem festem Schaum bestehenden, plastisch verformbaren Spielbausteins bekannt. Die Einlegeschrägen des Oberteils liegen an den Schrägen Längsseitenrändern der Bodenwand an.

Der Erfindung liegt die Aufgabe zugrunde, eine einfache und einfach auch von Kindern handhabbare Formgebungsvorrichtung zum Umformen von aus einem festen Schaum bestehenden, plastisch verformbaren Spielbausteinen vorzuschlagen.

Diese Aufgabe wird durch die Merkmale des Anspruchs 1 gelöst. Die erfindungsgemäße Formgebungsvorrichtung ist zweiteilig, sie weist ein im Querschnitt U-förmiges Teil und ein weiteres Teil mit zwei Stirnwänden, die durch einen Steg verbunden sind, auf. Dabei entspricht eine Breite des Stegs einem lichten Abstand zwischen zwei Schenkelwänden des im Querschnitt U-förmigen Teils und ein Abstand der Stirnwände des weiteren Teils entspricht einer Länge des im Querschnitt U-förmigen Teils. Das U-förmige Teil lässt sich zum Schließen der Formgebungsvorrichtung zwischen die Stirnwände des weiteren Teils stecken, wobei der Steg zwischen die beiden Schenkelwände des im Querschnitt U-förmigen Teils gelangt. Dadurch wird ein quaderförmiger Formgebungsraum zwischen den beiden Teilen der Formgebungsvorrichtung eingeschlossen. Ein zuvor eingelegter Spielbaustein, der aus einem festen, plastisch verformbaren Schaum besteht, lässt sich durch Zusammendrücken der beiden Teile der Formgebungsvorrichtung zu einem quaderförmigen Spielbaustein umformen.

Bei einer Ausgestaltung der Erfindung ist ein Einlegeteil vorgesehen, welches die strukturierte Formgebungsfläche aufweist. Das Einlegeteil wird vor dem Schließen der Formgebungsvorrichtung in eines der Teile der Formgebungsvorrichtung eingelegt. Die Ausbildung der strukturieren Formgebungsfläche an einem Einlegeteil hat den Vorteil, dass das Einlegeteil auswechselbar ist beispielsweise gegen ein anders strukturiertes Einlegeteil. Auf diese Weise lassen sich mit geringem Aufwand unterschiedlich strukturierte Oberflächen formen.

Bei einer Ausgestaltung der Erfindung weist die Formgebungsfläche eine Backsteinstruktur auf, sie verleiht einer Oberfläche eines Spielbausteins beim Umformen ein backsteinartiges Aussehen. Die umgeformten Spielbausteine lassen sich zu einer Spielzeugmauer zusammensetzen, deren Oberfläche die Form einer Backsteinmauer aufweist.

Es hat sich gezeigt, dass nach einer nur kurzen Schließzeit der Formgebungsvorrichtung sich ein umgeformter Spielbaustein teilweise rückverformt. Dadurch verschlechtern sich Maß- und Formgenauigkeit des umgeformten Spielbausteins. Auch die eingeformte Oberflächenstruktur formt sich nach einer nur kurzen Schließzeit der Formgebungsvorrichtung teilweise zurück, eine Ausprägung der Struktur verschlechtert sich. Um eine solche, unerwünschte, teilweise Rückverformung eines umgeformten Spielbausteins zu vermeiden muss die Formgebungsvorrichtung länger geschlossen bleiben, wobei mit länger beispielsweise einige Minuten gemeint ist. Es hat sich gezeigt, dass sich ein umgeformter Spielbaustein nicht oder allenfalls vernachlässigbar gering rückverformt, wenn die Formgebungsvorrichtung einige Minuten geschlossen bleibt. Ein minutenlanges Schließen der Formgebungsvorrichtung hat jedoch den Nachteil, dass das Umformen einer Anzahl Spielbausteine lange Zeit in Anspruch nimmt. Eine Weiterbildung der Erfindung sieht daher eine Aufnahmevorrichtung mit einer Anzahl an Hohlräumen vor, die in Form und Größe genau oder ungefähr mit dem Formgebungsraum der Formgebungsvorrichtung ohne das Einlegeteil übereinstimmen. Um eine Rückverformung eines umgeformten Spielbausteins nach dem Öffnen der Formgebungsvorrichtung zu vermeiden, wird der Spielbaustein gemeinsam mit dem Einlegeteil in einen der Hohlräume der Aufnahmevorrichtung eingelegt und auf diese Weise eine Rückverformung des Spielbausteins vermieden. Diese Ausgestaltung der Erfindung hat den Vorteil, dass die Formgebungsvorrichtung nur kurz zum Umformen eines Spielbausteins geschlossen werden muss und schnell wieder zum Umformen eines nächsten Spielbausteins verwendet werden kann.

Die Erfindung wird nachfolgend anhand eines in der Zeichnung dargestellten Ausführungsbeispiels näher erläutert. Es zeigen:
- Figur 1: eine Explosionsdarstellung einer erfindungsgemäßen Formgebungsvorrichtung;
- Figur 2: einen mit der Formgebungsvorrichtung aus Figur 1 umgeformten Spielbaustein; und
- Figur 3: eine Aufnahmevorrichtung der Formgebungsvorrichtung aus Figur 1 gemäß der Erfindung.

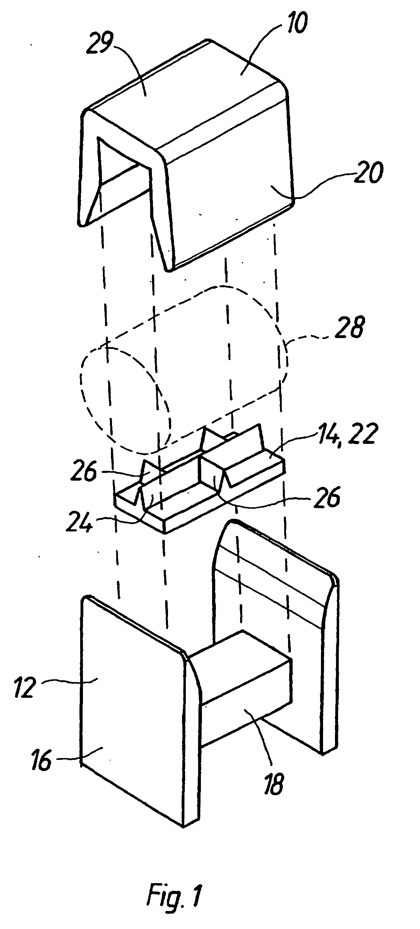

Die in Figur 1 dargestellte, erfindungsgemäße Formgebungsvorrichtung weist drei Teile 10, 12, 14 auf. Ein Teil 10 der Formgebungsvorrichtung hat die Form einer im Querschnitt U-förmigen Schiene. Ein weiteres Teil 12 der Formgebungsvorrichtung weist zwei Stirnwände 16 auf, die mit einem Steg 18 verbunden sind. Dabei entspricht eine Breite des Stegs 18 einem lichten Abstand zwischen zwei Schenkelwänden 20 des im Querschnitt U-förmigen Teils 10 der Formgebungsvorrichtung. Ein Abstand der Stirnwände 16 voneinander entspricht einer Länge des im Querschnitt U-förmigen Teils 10. Die beiden Teile 10, 12 der erfindungsgemäßen Formgebungsvorrichtung lassen sich so zusammensetzen bzw. zusammenstecken, dass sie einen quaderförmigen Hohlraum umschließen. Der Hohlraum ist ein Formgebungsraum der erfindungsgemäßen Formgebungsvorrichtung. Der Formgebungsraum wird an drei Längsseiten von dem U-förmigen Teil 10, an der vierten Längsseite vom Steg 18 an den Stirnseiten von den Stirnwänden 16 begrenzt.

Als weiteres Teil weist die erfindungsgemäße Formgebungsvorrichtung das Einlegeteil 14 auf. Dieses weist eine rechteckige Grundplatte auf, die deckungsgleich mit einer dem U-förmigen Teil 10 zugewandte Fläche des Stegs 18 ist. Das Einlegeteil 14 weist eine strukturierte Formgebungsfläche 22 auf. Im dargestellten und beschriebenen Ausführungsbeispiel der Erfindung wird die strukturierte Formgebungsfläche von Rippen 24, 26 gebildet, die von einer Seite des Einlegeteils 14 abstehen. Die Rippen 24, 26 weisen einen dreiecksförmigen Querschnitt auf. Eine der Rippen 24 ist in einer Längsmitte des Einlegeteils 14 angeordnet, sie bildet eine durchgehende Längsrippe 24, in der Mitte der Längsrippe 24 ist eine Querrippe 26 angeordnet, die rechtwinklig zu einer Seite von der Längsrippe 24 absteht. Von einer gegenüberliegenden Seite der Längsrippe 24 stehen zwei weitere Querrippen 26 rechtwinklig ab, die jeweils um ¼ einer Länge der durchgehenden Längsrippe 24 bzw. des Einlegeteils 14 versetzt zu der in der Mitte angeordneten Querrippe 26 auf der anderen Seite der Längsrippe 24 angeordnet sind.

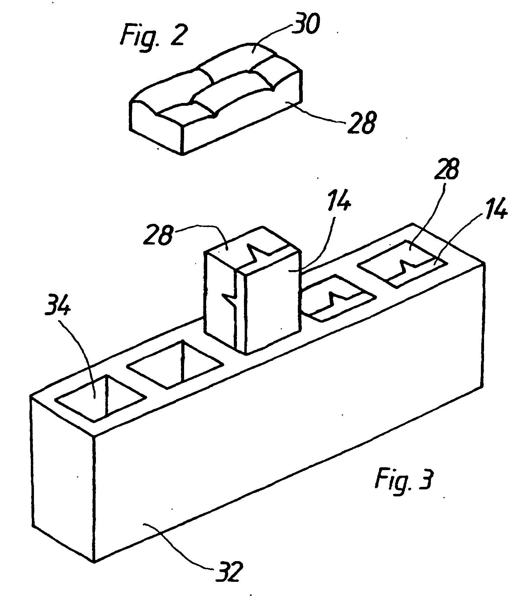

Die erfindungsgemäße Formgebungsvorrichtung dient zum Umformen eines aus einem festen Schaum bestehenden, plastisch verformbaren Spielbausteins 28, wie er in Figur 1 mit Strichlinien angedeutet dargestellt ist. Ein solcher Spielbaustein 28 und seine Herstellung ist beispielsweise beschrieben in der DE 197 03 038. Er weist eine näherungsweise zylindrische Form auf. Vor dem Umformen des Spielbausteins 28 wird das Einlegeteil 14 auf den Steg 18 gelegt, so dass die Rippen 24, 26 in Richtung des U-förmigen Teils 10 weisen. Ebenso ist es möglich, das Einlegeteil 14 von innen auf eine Jochwand 29 des U-förmigen Teils 10 aufzulegen, so dass die Rippen 24, 26 in Richtung des Stegs 18 weisen. Nach dem Einlegen des Einlegeteils 14 wird der Spielbaustein 28 in das U-förmige Teil 10 oder in das die Stirnwände 16 aufweisende Teil 12 eingelegt und die Formgebungsvorrichtung wird durch Zusammensetzen bzw. Zusammenstecken ihrer Teile 10, 12 geschlossen. Ein Volumen des von der geschlossenen Formgebungsvorrichtung umschlossenen, quaderförmigen Formgebungsraums ist kleiner als ein Volumen des Spielbausteins 28, so dass der Spielbaustein 28 in der geschlossenen Formgebungsvorrichtung verdichtet wird. Durch das Verdichten erhöht sich eine Festigkeit des Spielbausteins 28. Zugleich wird der Spielbaustein 28 zu einem Quader umgeformt und die Rippen 24, 26 des Einlegeteils 14 drücken sich in eine Oberfläche des Spielbausteins 28 ein. Durch das Umformen mit der Formgebungsvorrichtung erhält der ursprünglich zylinderförmige Spielbaustein 28 die Form eines Quaders, wobei die Rippen 24, 26 des Einlegeteils 14 eine backsteinartige Struktur in eine Oberfläche 30 des Spielbausteins 28 einformen. Nach dem Öffnen der Formgebungsvorrichtung und Entnahme des Spielbausteins 28 hat dieser die in Figur 2 dargestellte Form. Weil die Rippen 24, 26 des Einlegeteils 14 in eine Oberfläche 30 des Spielbausteins 28 eine Backsteinartige Struktur einformen, lässt sich die mit den Rippen 24, 26 versehene Oberfläche des Einlegeteils 14 der erfindungsgemäßen Formgebungsvorrichtung auch als eine eine Backsteinstruktur aufweisende Formgebungsfläche 22 bezeichnen.

Wird die erfindungsgemäße Formgebungsvorrichtung zum Umformen des Spielbausteins 28 nur kurz geschlossen und der Spielbaustein 28 schnell wieder entnommen, so formt er sich teilweise zurück. Dabei vergrößert der Spielbaustein 28 seine Volumen, seine Oberflächen werden ballig und eine Ausprägung der Backsteinstruktur seiner Oberfläche 30 wird geringer. Um dies zu Vermeiden weist die erfindungsgemäße Formgebungsvorrichtung eine in Figur 3 dargestellte Aufnahmevorrichtung 32 auf. Diese ist mit einer Anzahl Hohlräumen 34 versehen, die als im Querschnitt rechteckige, durch die Aufnahmevorrichtung 32 durchgehende Löcher ausgebildet sind. Ein Querschnitt der Hohlräume 34 entspricht einem Querschnitt des zu einem Quader umgeformten Spielbausteins 28 zusammen mit dem Einlegeteil 14. Eine Länge der Hohlräume 34 entspricht einer Länge des umgeformten Spielbausteins 28 bzw. des Einlegeteils 14. Nach der Entnahme des umgeformten Spielbausteins 28 aus der Formgebungsvorrichtung wird der Spielbaustein 28, wie in Figur 3 dargestellt, gemeinsam mit dem Einlegeteil 14 in einen der Hohlräume 34 gesteckt. Die Aufnahmevorrichtung 32 verhindert eine Volumenvergrößerung und eine teilweise Rückverformung des Spielbausteins 28. Der Spielbaustein 28 verbleibt mit dem Einlegeteil 14 so lange im Hohlraum 34 der Aufnahmevorrichtung 32, bis er sich nicht mehr oder jedenfalls nur noch vernachlässigbar gering rückverformt. Dies benötigt üblicherweise einige Minuten. Anschließend wird der Spielbaustein 28 aus der Aufnahmevorrichtung 32 entnommen und vom Einlegeteil 14 getrennt. Das Einlegeteil 14 kann zur Formgebung wieder in die Formgebungsvorrichtung eingelegt, d.h. wiederverwendet werden. Der umgeformte Spielbaustein 28 kann mit weiteren umgeformten Spielbausteinen 28 beispielsweise zu einer Spielzeugmauer zusammengesetzt werden, die backsteinartige Oberfläche 30 gibt einer Oberfläche der Spielzeugmauer das Aussehen einer Backsteinmauer (nicht dargestellt). Zur Verstärkung können die umgeformten Spielbausteine 28 beispielsweise auf eine Pappe als Träger geklebt werden. Durch die Aufnahmevorrichtung 32 braucht die Formgebungsvorrichtung zum Umformen des Spielbausteins 28 nur kurz geschlossen und kann schnell zur Umformung eines weiteren Spielbausteins 28 wieder geöffnet werden.

Um eine Vorstellung von der Größe der erfindungsgemäßen Formgebungsvorrichtung zu geben, wird angemerkt, dass ein Durchmesser des unverformten Spielbausteins 28 circa 17 mm beträgt.

## Patentansprüche

1. Formgebungsvorrichtung zum Umformen eines aus einem festen Schaum bestehenden, plastisch verformbaren Spielbausteins, wobei die Formgebungsvorrichtung zweiteilig ist und in einem geschlossenen Zustand einen Formgebungsraum umschließt, **dadurch gekennzeichnet, dass** die Formgebungsvorrichtung ein im Querschnitt U-förmiges Teil (10) und ein weiteres Teil (12) aufweist, das zwei Stirnwände (16), die mit einem Steg (18) verbunden sind, aufweist, wobei eine Breite des Stegs (18) einem lichten Abstand zwischen zwei Schenkelwänden (20) des im Querschnitt U-förmigen Teils (10) und ein Abstand der Stirnwände (16) des weiteren Teils (12) einer Länge des im Querschnitt U-förmigen Teils (10) entspricht.

2. Formgebungsvorrichtung nach Anspruch 1, **dadurch gekennzeichnet, dass** die Formgebungsvorrichtung ein Einlegeteil (14) aufweist, welches in den Formgebungsraum einlegbar ist und eine strukturierte Formgebungsfläche (22) aufweist.

3. Formgebungsvorrichtung nach Anspruch 2, **dadurch gekennzeichnet, dass** die Formgebungsfläche (22) eine Backsteinstruktur aufweist.

4. Eine Kombination aus Formgebungsvorrichtung nach Anspruch 2 und einer Aufnahmevorrichtung, **dadurch gekennzeichnet, dass** die Aufnahmevorrichtung (32) mit einer Anzahl Hohlräume (34) versehen ist, die in Form und Größe mit dem Formgebungsraum der Formgebungsvorrichtung ohne das Einlegeteil (14) übereinstimmen.

## Claims

1. Shaping device for reshaping a plastically deformable toy building block made from a solid foam, the shaping device being of two parts and, in the closed state, surrounding a shaping space, **characterised in that** the shaping device comprises a part (10) of U-shaped cross-section and a further part (12) which has two end walls (16) connected by a bridge (18), the width of the bridge (18) corresponding to the clear space between two side walls (20) of the part (10) of U-shaped cross-section and the distance between the end walls (16) of the further part (12) corresponding to the length of the part (10) of U-shaped cross-section.

2. Shaping device according to claim 1, **characterised in that** the shaping device comprises an insert part (14), which is arranged to be inserted into the shaping space and which has a structured shaping surface (22).

3. Shaping device according to claim 2, **characterised in that** the shaping surface (22) has a brick structure.

4. A combination of a shaping device according to claim 2 and a holding device, **characterised in that** the holding device (32) is provided with a number of hollow spaces (34), which correspond in size and shape to the shaping space of the shaping device without the insert part (14).

## Revendications

1. Dispositif de mise en forme pour façonner un bloc de jeu de construction déformable plastiquement et fait en mousse solide, le dispositif de mise en forme étant en deux parties et enfermant, lorsqu'il est fermé, un espace de mise en forme, **caractérisé en ce que** le dispositif de mise en forme présente une partie (10) à section en forme de U et une autre partie (12) qui présente deux parois frontales (16) qui sont reliées par une entretoise (18), la largeur de l'entretoise (18) correspondant à la distance libre entre les parois (20) des deux branches de la partie (10) à section en forme de U et la distance entre les parois frontales (16) de l'autre partie (12) correspondant à la longueur de la partie (10) à section en forme de U.

2. Dispositif de mise en forme selon la revendication 1, **caractérisé en ce que** le dispositif de mise en forme présente un insert (14) qui peut être inséré dans l'espace de mise en forme et qui présente une face structurée (22) de mise en forme.

3. Dispositif de mise en forme selon la revendication 2, **caractérisé en ce que** la face (22) de mise en forme présente une structure de brique.

4. Combinaison d'un dispositif de mise en forme selon la revendication 2 et d'un dispositif formant réceptacle, **caractérisée en ce que** le dispositif (32) formant réceptacle est pourvu d'un certain nombre de cavités (34) qui correspondent par leur forme et leur taille à l'espace de mise en forme du dispositif de mise en forme sans l'insert (14).
